(19)

(11) **EP 3 854 610 B1**

(12) **EUROPEAN PATENT SPECIFICATION**

(45) Date of publication and mention of the grant of the patent:
**17.04.2024 Bulletin 2024/16**

(21) Application number: **19863187.1**

(22) Date of filing: **13.09.2019**

(51) International Patent Classification (IPC):
***B60C 11/00*** *(2006.01)* ***B60C 1/00*** *(2006.01)*
***B60C 9/22*** *(2006.01)* ***C08K 5/105*** *(2006.01)*
***C08K 5/18*** *(2006.01)* ***C08L 21/00*** *(2006.01)*

(52) Cooperative Patent Classification (CPC):
(C-Sets available)
**B60C 11/005; B60C 1/0016; B60C 9/22; C08K 5/005; C08L 9/06;** B60C 2001/0083; B60C 2009/2214; B60C 2009/2257; B60C 2011/0033; C08K 5/13; C08K 5/18; C08K 5/3437; Y02T 10/86 (Cont.)

(86) International application number:
**PCT/JP2019/036194**

(87) International publication number:
**WO 2020/059673 (26.03.2020 Gazette 2020/13)**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2018 JP 2018174053**

(43) Date of publication of application:
**28.07.2021 Bulletin 2021/30**

(73) Proprietor: **Sumitomo Rubber Industries, Ltd.**
**Kobe-shi, Hyogo 651-0072 (JP)**

(72) Inventors:
- **OTSUBO, Shigeki**
  **Kobe-shi, Hyogo 651-0072 (JP)**
- **MIYAZAKI, Tatsuya**
  **Kobe-shi, Hyogo 651-0072 (JP)**

(74) Representative: **TBK**
**Bavariaring 4-6**
**80336 München (DE)**

(56) References cited:
**EP-A1- 2 949 695** **EP-A1- 3 012 118**
**WO-A1-2015/001942** **JP-A- H0 796 715**
**JP-A- 2004 042 786** **JP-A- 2012 091 733**
**JP-A- 2013 166 913** **JP-A- 2015 232 110**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 854 610 B1

(52) Cooperative Patent Classification (CPC): (Cont.)

C-Sets
**C08K 5/005, C08L 9/00;**
**C08L 9/06, C08K 3/04, C08K 3/36, C08K 5/18, C08L 9/00, C08L 9/06;**
**C08L 9/06, C08K 3/04, C08K 3/36, C08L 9/00, C08L 9/06**

## Description

### TECHNICAL FIELD

The present invention relates to a pneumatic tire.

### BACKGROUND ART

Since an automobile tire uses a rubber composition made from a natural rubber or a diene-based synthetic rubber as raw materials, deterioration can be accelerated under high ozone concentration conditions, ultraviolet conditions, or high temperature environment where antioxidant is easily lost, which can produce crack such as Trade Groove Cracking (TGC) at a bottom of a tread main groove.

In recent years, there has been an increasing need for weight reduction of a tire, which has been developed by reducing a subtread thickness at a bottom of tread main grooves. However, there is a problem that TGC easily occurs if the weight-reduced tire is stored at a tire dealer, a store, or the like. TGC easily occurs, particularly when tires are stored with a rubber distorted at the bottom of the tread main groove such as when the tires are stacked horizontally (about 10 to 15 tires) or pushed into a narrow vertical stacking shelf space to an extent that the tires are deformed, or stored in an environment with a high ozone concentration, for example, in a dry season, near an electric spark during motor rotation or an ozone deodorizer, or the like. It is presumably because that the rubber easily becomes distorted at the bottom of the tread main groove by reducing the subtread thickness at the bottom of tread main grooves, and thus TGC easily occurs during storage.

In order to suppress occurrence of crack and progress thereof in the presence of ozone, for example, additives such as a phenylenediamine-based antioxidant and a petroleum-based wax are compounded in a rubber composition (e.g., Patent Document JP 2013-166913 A).

Other known pneumatic tires are described in documents EP 3012118 A and EP 2949695 A.

### SUMMARY OF THE INVENTION

### PROBLEM TO BE SOLVED BY THE INVENTION

An object of the present invention is to provide a pneumatic tire that can improve wet grip performance while maintaining a good TGC resistance, even when the tire is stored as having a thin thickness of a subtread at a bottom of tread main grooves, and rim-assembled and mounted on a vehicle to be left to stand.

### MEANS TO SOLVE THE PROBLEM

As a result of intensive studies, the present inventors have found that the above-described problem can be solved by comprising a predetermined amount of antioxidant in a rubber composition for a cap tread, and completed the present invention.

That is, the present invention relates to:

[1] A pneumatic tire comprising a tread part, the tread part comprising at least a cap tread and a jointless band, the cap tread being formed of a rubber composition for a cap tread, the jointless band comprising fiber cords coated with a rubber composition for fiber cord toppings, the rubber composition for a cap tread comprising 6.0 parts by mass or more of antioxidant based on 100 parts by mass of a rubber component comprising a diene-based rubber, and wherein a subtread thickness at the bottom of tread main grooves is 0.1 to 3.0 mm;

[2] The pneumatic tire of the above [1], wherein the rubber composition for a cap tread comprises 0.10 to 6.0 parts by mass of surfactant having a hydrophilic-lipophilic balance (HLB) value calculated by the method described below of 5 to 12 and/or $C_{40-70}$ branched alkane based on 100 parts by mass of the rubber component;

[3] The pneumatic tire of the above [1] or [2], wherein the rubber composition for a cap tread comprises a bisphenol-based antioxidant;

[4] The pneumatic tire of any one of the above [1] to [3], wherein the rubber composition for a cap tread comprises two or more selected from the group consisting of a phenylenediamine-based antioxidant, a bisphenol-based antioxidant, and a quinoline-based antioxidant;

[5] The pneumatic tire of any one of the above [1] to [4], wherein the rubber composition for a cap tread comprises 3.0 parts by mass or more of phenylenediamine-based antioxidant and/or bisphenol-based antioxidant based on 100 parts by mass of the rubber component;

[6] The pneumatic tire of any one of the above [1] to [5], wherein the rubber composition for a cap tread comprises

3.1 parts by mass or more of phenylenediamine-based antioxidant and quinoline-based antioxidant based on 100 parts by mass of the rubber component; and

[7] The pneumatic tire of any one of the above [1] to [6], wherein the rubber composition for fiber cord toppings substantially does not comprise a phenylenediamine-based antioxidant and a bisphenol-based antioxidant.

EFFECT OF THE INVENTION

According to the present invention, a pneumatic tire is provided which can improve wet grip performance while maintaining a good TGC resistance, even when the tire is stored as having a thin thickness of a subtread at a bottom of tread main grooves, and rim-assembled and mounted on a vehicle to be left to stand.

EMBODIMENT FOR CARRYING OUT THE INVENTION

The pneumatic tire according to an embodiment of the present invention comprises a tread part, the tread part comprising at least a cap tread and a jointless band, the cap tread being formed of a rubber composition for a cap tread, the jointless band comprising fiber cords coated with a rubber composition for fiber cord toppings, the rubber composition for a cap tread comprising 3.0 parts by mass or more of antioxidant based on 100 parts by mass of a rubber component comprising a diene-based rubber, and wherein a subtread thickness at the bottom of tread main grooves is 0.1 to 3.0 mm. Each component will be described below.

Besides, in the present specification, a numerical range indicated with "to" includes the numerical values of both ends.

<Configuration of tread part>

The pneumatic tire according to the present embodiment has a tread part, the tread part having at least a cap tread and a jointless band. Furthermore, it is preferable that the tread part further has a base tread and/or an under tread.

The cap tread is a member consisting of a rubber composition for a cap tread and a member which is a surface layer part of a tread part having a multi-layer structure and touches the ground.

The base tread is a member consisting of a rubber composition for a base tread and a member which is located between a cap tread and an under tread or a jointless band.

The under tread is a member consisting of a rubber composition for an under tread and a member which is located between the cap tread or the base tread and the jointless band and coats the jointless band or an outer part of a breaker in a radial direction of a tire.

The jointless band (hereinafter, also may be referred to as JLB) is a member in which a fiber cord is coated with a rubber composition for coating a fiber cord, and a member provided on an outer side of a breaker in a radial direction of a tire, in order to suppress an entire tread part from being lifted from a casing (a package below the tread part) by a centrifugal force of a tire during running of a vehicle.

In the pneumatic tire according to the present embodiment, a subtread thickness at the bottom of tread main grooves is 0.1 to 3.0 mm, preferably 0.3 to 2.5 mm, more preferably 0.5 to 2.0 mm, further preferably 0.6 to 1.8 mm, particularly preferably 0.7 to 1.6 mm. When the subtread thickness at the bottom of tread main grooves exceeds 2.0 mm, a weight of the tire increases, and fuel efficiency deteriorates. On the other hand, when the subtread thickness at the bottom of tread main grooves is less than 0.1 mm, TGC tends to easily occur.

In the present embodiment, even when a tire, in which a subtread at a bottom of tread main grooves has a thin thickness as within the above-described ranges, is stored, it has good wet grip performance and TGC resistance as it is a pneumatic tire having a specific configuration. Besides, In the present specification, the bottom of tread main grooves means a groove for drainage formed in a tread in a circumferential direction of a tire, and, for example, a first longitudinal main groove 12 and a second longitudinal main groove 13 in a tread pattern of a pneumatic tire described in FIG. 1 of JP 2006-069305 A correspond to the bottom of tread main grooves. Furthermore, in the present specification, the subtread thickness at the bottom of tread main grooves means a thickness in a radial direction of a tire from a bottom surface of a groove at a bottom of tread main grooves to a surface of fiber cords in a jointless band.

<Cap tread>

As mentioned above, the cap tread is a member consisting of a rubber composition for a cap tread.

(Rubber component)

Examples of a rubber component that can be used in a rubber composition for a cap tread include diene-based

rubbers such as an isoprene-based rubber, a styrene butadiene rubber (SBR), a butadiene rubber (BR), a styrene-isoprene-butadiene rubber (SIBR), a chloroprene rubber (CR), and acrylonitrile-butadiene rubber (NBR), and non-diene-based rubbers such as an ethylene-propylene-diene rubber (EPDM), a butyl rubber (IIR), and a halogenated butyl rubber (X-IIR), and the like. They may be used alone, or two or more thereof may be used in combination. Among them, diene-based rubbers are preferable because they can be appropriately applied to cap tread applications. Furthermore, among the diene-based rubbers, an isoprene-based rubber, a SBR and a BR are more preferable, and a SBR and a BR are more preferable, because grip performance and abrasion resistance can be obtained with good balance. One of the above-described rubber components may be used alone, or two or more thereof may be used in combination.

A content of a diene-based rubber in 100% by mass of a rubber component is preferably 70% by mass or more, more preferably 80% by mass or more, further preferably 90% by mass or more. Furthermore, the rubber component may comprise only a diene-based rubber. The diene-based rubber preferably comprises a SBR and a BR, may be a diene-based rubber comprising a SBR and a BR only, and may be a diene-based rubber comprising a SBR only. Moreover, as another embodiment, a diene-based rubber comprising an isoprene rubber (preferably a natural rubber) and a BR, a diene-based rubber comprising an isoprene-based rubber (preferably a natural rubber) only, and the like are exemplified.

Examples of a SBR include, but not particularly limited to, for example, an unmodified emulsion-polymerized styrene-butadiene rubber (E-SBR) and a solution-polymerized styrene-butadiene rubber (S-SBR), and modified SBRs such as a modified emulsion-polymerized styrene-butadiene rubber (a modified E-SBR) and a modified solution-polymerized styrene-butadiene rubber (a modified S-SBR). Furthermore, examples of a SBR include those of an oil-extending type in which flexibility is adjusted by adding a spreading oil and those of a non-oil-extending type in which no spreading oil is added, both of which can be used. One of these SBRs may be used alone, or two or more thereof may be used in combination.

Examples of a S-SBR that can be used in the present embodiment include S-SBRs manufactured and sold by JSR Corporation, Sumitomo Chemical Co., Ltd., Ube Industries, Ltd., Asahi Kasei Corporation, Zeon Corporation, etc.

A styrene content of a SBR is preferably 15% by mass or more, more preferably 20% by mass or more, from the viewpoints of wet grip performance and abrasion resistance. Furthermore, it is preferably 60% by mass or less, more preferably 50% by mass or less, from the viewpoints of temperature dependence of grip performance and abrasion resistance. Besides, the styrene content is a value calculated by $^1$H-NMR measurement.

A vinyl content of a SBR is preferably 15% by mass or more, more preferably 20% by mass or more, from the viewpoint of wet grip performance. Furthermore, it is preferably 65% by mass or less, preferably 63% by mass or less, from the viewpoint of temperature dependence of grip performance. Besides, the vinyl content (1,2-bond butadiene unit amount) is a value measured by infrared absorption spectrometry.

A weight-average molecular weight (Mw) of a SBR is preferably 100,000 or more, more preferably 150,000 or more, further preferably 250,000 or more, from the viewpoints of wet grip performance and the like. Furthermore, it is preferably 2,000,000 or less, more preferably 1,500,000 or less, from the viewpoints of cross-linking uniformity and the like. Besides, the Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

A content of a SBR in 100% by mass of a rubber component is preferably 10% by mass or more, more preferably 30% by mass or more, further preferably 60% by mass or more, from the viewpoints of wet grip performance and abrasion resistance. Furthermore, the content is preferably 95% by mass or less, more preferably 90% by mass or less, further preferably 85% by mass or less, in the case of a cap tread for a general-purpose passenger vehicle. On the other hand, it may be 100% by mass in the case of a cap tread for a competition vehicle. Besides, when a SBR of an oil-extending type is used as a SBR, a content of the SBR itself as a solid content compounded in the SBR of an oil-extending type shall be defined as a content in a rubber component.

A BR is not particularly limited, and those which are common in the tire industry can be used such as, for example, a BR having a content of cis-1,4 bond of less than 50% (a low cis BR), a BR having a content of cis 1,4 bond of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). Among them, at least one selected from the group consisting of a high cis BR and a rare-earth-based BR is preferably used.

Examples of a high cis BR include, for example, BR1220 manufactured by Zeon Corporation, BR130B, BR150B, BR150L manufactured by Ube Industries, Ltd., and BR730 manufactured by JSR Corporation, and the like. Low-temperature property and abrasion resistance can be improved by comprising a high cis BR. Examples of a rare-earth-based BR include, for example, BUNA-CB25 manufactured by LANXESS, and the like.

The rare-earth-based BR is a butadiene rubber synthesized using a rare-earth element-based catalyst. The rare-earth-based BR has a high cis content and a low vinyl content. The rare-earth-based BR is not particularly limited, and those commonly used in the tire manufacturing can be used.

Examples of a rare-earth element-based catalyst used in synthesis of the rare-earth based BR include, but not particularly limited to, those including a lanthanum series rare-earth element compound, an organic aluminum compound, aluminoxane, a halogen-containing compound, and a Lewis base as necessary, and the like. Among them, a neodymium (Nd)-based catalyst using a Nd-containing compound as a lanthanum series rare-earth element compound is particularly preferable since it has good abrasion resistance and heat generation performance. The rare-earth element-based catalyst may be used alone, or two or more thereof may be used in combination.

A weight-average molecular weight (Mw) of the rare-earth-based BR is preferably 200,000 or more, more preferably 250,000 or more, from the viewpoints of abrasion resistance and fuel efficiency. Furthermore, it is preferably 900,000 or less, more preferably 600,000 or less, from the viewpoint of processability.

A content of cis-1,4 bond of the rare-earth-based BR is preferably 90% by mass or more, more preferably 93% by mass or more, further preferably 95% by mass or more. When the content of cis-1,4 bond is within the above-described ranges, breaking elongation and abrasion resistance of a rubber composition further improve.

A vinyl content of the rare-earth-based BR is preferably 1.8% by mass or less, more preferably 1.0% by mass or less, further preferably 0.5% by mass or less. When the vinyl content of the rare-earth-based BR is within the above-described ranges, breaking elongation and abrasion resistance of a rubber composition further improve. Besides, in the present embodiment, both of a vinyl content (1,2-bond butadiene unit amount) and a content of cis-1,4 bond can be measured by infrared absorption spectrometry.

Examples of a SPB-containing BR include those in which a 1,2-syndiotactic polybutadiene crystal is chemically bonded and dispersed with a BR, but not those in which the crystal is simply dispersed in the BR. Examples of such SPB-containing BR include VCR-303, VCR-412, VCR-617 manufactured by Ube Industries, Ltd, and the like.

Examples of a modified BR include those obtained by adding a tin compound after polymerizing 1,3-butadiene by a lithium initiator, the end of the modified BR molecule being further bonded by tin-carbon bond (a tin-modified BR), a butadiene rubber having a condensed alkoxysilane compound at its active end (a silica-modified BR), and the like. Examples of such modified BR include, for example, BR1250H (a tin-modified BR) manufactured by Zeon Corporation, a S-modified polymer (a silica-modified BR) manufactured by Sumitomo Chemical Co., Ltd., and the like.

A content of a BR in a rubber component is preferably 5% by mass or more, more preferably 10% by mass or more, further preferably 15% by mass or more, from the viewpoint of abrasion resistance. Furthermore, it is preferably 40% by mass or less, more preferably 35% by mass or less, further preferably 30% by mass or less, from the viewpoint of wet grip performance.

Examples of an isoprene-based rubber include a synthetic isoprene rubber (IR), a natural rubber (NR), a modified natural rubber, and the like. Examples of the NR include a deproteinized natural rubber (DPNR) and a high-purity natural rubber (HPNR), and examples of the modified natural rubber includes an epoxidized natural rubber (ENR), a hydrogenated natural rubber (HNR), a grafted natural rubber, and the like. Furthermore, as the NR, those common in the tire industry can be used, such as, for example, SIR20, RSS#3, and TSR20. Among them, a NR and an IR are preferable, and a NR is more preferable.

(Antioxidant)

The rubber composition for a cap tread according to the present embodiment is characterized by comprising 6.0 parts by mass or more of antioxidant based on 100 parts by mass of the rubber component. Since an aroma oil and antioxidant (particularly a phenylenediamine-based antioxidant) exhibit similar bleeding behavior, in the present embodiment, antioxidant is considered as a polar plasticizer and used in a larger amount than usual. Generally, since, in antioxidant, ozone-degrading and oxidative-degrading performances are saturated in a residual amount of about 3 parts by mass, and a fresh rubber layer appears in accordance with abrasion of a tread, so that abrasion resistance and durability do not affect running performance, it is usually a rare case that 3 parts by mass or more of antioxidant is compounded.

Antioxidant is not particularly limited, and those commonly used in the tire industry can be used, for example, a phenylenediamine-based antioxidant, a diphenylamine-based antioxidant, a phenol-based antioxidant, a quinone-based antioxidant, and the like. Among them, a phenylenediamine-based antioxidant and a bisphenol-based antioxidant, in particular a bisphenol-based antioxidants, are appropriately used, since they entangle with a diene-based rubber, in particular a SBR chain and increase in tan $\delta$ within a wide temperature range to provide an effect of enhancing wet grip performance. Furthermore, a 2,2,4-trimethyl-1,2-dihydroquinoline polymer (TMQ) is also appropriately used for the reason of suppression of oxidative deterioration and refractory. It is more preferable to comprise two or more selected from the group consisting of a phenylenediamine-based antioxidant, a bisphenol-based antioxidant, and a quinoline-based antioxidant, further preferable to comprise a phenylenediamine-based antioxidant and/or a bisphenol-based antioxidant and a quinoline-based antioxidant, and particularly preferable to comprise a phenylenediamine-based antioxidant, a bisphenol-based antioxidant, and a quinoline-based antioxidant, from the viewpoint of highly achieving both TGC resistance and wet grip performance.

Examples of the phenylenediamine-based antioxidant include N-(1,3-dimethylbutyl)-N'-phenyl-p-phenylenediamine, N-isopropyl-N'-phenyl-p-phenylenediamine, N,N'-diphenyl-P-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis (1,4-dimethylpentyl)-p-phenylenediamine, N,N'-bis (1-ethyl-3-methylpentyl)-p-phenylenediamine, N-4-Methyl-2-pentyl-N'-phenyl-p-phenylenediamine, N,N'-diaryl-p-phenylenediamine, hindered diaryl-p-phenylenediamine, phenylhexyl-p-phenylenediamine, phenyloctyl-p-phenylenediamine, and the like. Among them, N-(1,3-dimethylbutyl)-N'-phenyl-p-phenylenediamine is preferable.

Examples of the diphenylamine-based antioxidant include p-isopropoxydiphenylamine, p-(p-toluenesulfonylamide)-diphenylamine, N,N-diphenylethylenediamine, octylated diphenylamine, and the like.

Examples of the phenol-based antioxidant include monophenol-based antioxidants such as 2,6-di-tert-butyl-4-methylphenol, 2,6-di-tert-butyl-4-ethylphenol, 2,6-di-tert-butylphenol, 1-oxy-3-methyl-4-isopropylbenzene, 2-methyl-4,6-bis[(octylthio)methyl]phenol, butylhydroxyanisole, 2,4-dimethyl-6-tert-butylphenol, and n-octadecyl-3-(4'-hydroxy-3',5'-di-tert-butylphenyl)propionate; bisphenol-based antioxidants such as 2,2'-methylenebis-(4-methyl-6-tert-butylphenol), 2,2'-Methylenebis-(4-ethyl-6-tert-butylphenol), 4,4'-butylidenebis-(3-methyl-6-tert-butylphenol), and 1,1'-bis-(4-hydroxyphenyl)-cyclohexane; polyphenol-based antioxidants such as tetrakis-[methylene-3-(3',5'-di-tert-butyl-4'-hydroxyphenyl)propionate] methane, and the like. Among them, bisphenol-based antioxidants are preferable, 2,2'-methylenebis-(4-methyl-6-tert-butylphenol) and 4,4'-butylidenebis-(3-methyl-6-tert-butylphenol) are more preferable. And 4,4'-butylidenebis-(3-methyl-6-tert-butylphenol) is further preferable.

Examples of the quinone-based antioxidant include benzoquinone-based, hydroquinone-based, catechol-based, quinonediimine-based, quinomethane-based, and quinonedimethane-based antioxidants, and the like. Among them, a quinonediimine-based antioxidant is preferable.

Examples of the quinonediimine-based antioxidant include N-isopropyl-N'-phenyl-p-quinonediimine, N-(1,3-dimethylbutyl)-N'-phenylquinonediimine, N,N'-diphenyl-p-quinonediimine, N-cyclohexyl-N'-phenyl-p-quinonediimine, N-n-hexyl-N'-phenyl-p-quinonediimine, N,N'-dioctyl-p-quinonediimine, and the like. Among them, N-(1,3-dimethylbutyl)-N'-phenylquinonediimine (6QDI) is preferable.

Examples of the quinoline-based antioxidant include 2,2,4-trimethyl-1,2-dihydroquinoline polymer, 6-ethoxy-2,2,4-trimethyl-1,2-dihydroquinoline, 6-anilino-2,2,4-trimethyl-1,2-dihydroquinoline, poly-2,2,4-trimethyl-1,2-dihydroquinoline, and the like. 2,2,4-trimethyl-1,2-dihydroquinoline polymer (TMQ) is preferable.

A total content of antioxidant based on 100 parts by mass of the rubber component is 6.0 parts by mass or more, preferably 7.0 parts by mass or more, particularly preferably 8.0 parts by mass or more. When the content of antioxidant is 6.0 parts by mass or more, TGC resistance and wet grip performance are sufficiently exhibited. Furthermore, the content is preferably 25 parts by mass or less, more preferably 20 parts by mass or less, further preferably 18 parts by mass or less.

A content of the phenylenediamine-based antioxidant based on 100 parts by mass of the rubber component is preferably 2.0 parts by mass or more, more preferably 3.0 parts by mass or more, further preferably 3.1 parts by mass or more, particularly preferably 3.6 parts by mass or more. Furthermore, the content is preferably 20 parts by mass or less, more preferably 15 parts by mass or less, further preferably 10 parts by mass or less.

A content of the bisphenol-based antioxidant based on 100 parts by mass of the rubber component is preferably 0.1 parts by mass or more, more preferably 1.0 part by mass or more, further preferably 2.5 parts by mass or more, particularly preferably 3.6 parts by mass or more. Furthermore, the content is preferably 20 parts by mass or less, more preferably 15 parts by mass or less, further preferably 10 parts by mass or less.

A content of the quinoline-based antioxidant based on 100 parts by mass of the rubber component is preferably 0.1 parts by mass or more, more preferably 0.3 parts by mass or more, further preferably 0.5 parts by mass or more, particularly preferably 0.7 part by mass or more. Furthermore, the content is preferably 10 parts by mass or less, more preferably 5.0 parts by mass or less, further preferably 3.0 parts by mass or less.

A total content of the phenylenediamine-based antioxidant and the bisphenol-based antioxidant is preferably 3.0 parts by mass or more, more preferably 3.1 parts by mass or more, further preferably 4.0 parts by mass or more, further preferably 5.0 parts by mass or more, further preferably 6.0 parts by mass or more, further preferably 7.0 parts by mass or more, particularly preferably 8.0 parts by mass or more, based on 100 parts by mass of the rubber component, from the viewpoint of wet grip performance. Furthermore, the content is preferably 25 parts by mass or less, more preferably 20 parts by mass or less, further preferably 18 parts by mass or less.

The rubber composition for a cap tread according to the present embodiment is further improved in dry grip performance and wet grip performance by using a phenylenediamine-based antioxidant and a quinoline-based antioxidant in combination, and is also effective in suppressing oxidative deterioration during running on a dry road surface. A total content of the phenylenediamine-based antioxidant and the quinoline-based antioxidant is preferably 3.0 parts by mass or more, more preferably 3.1 parts by mass or more, further preferably 4.0 parts by mass or more, further preferably 5.0 parts by mass or more, further preferably 6.0 parts by mass or more, further preferably 7.0 parts by mass or more, particularly preferably 8.0 parts by mass or more, based on 100 parts by mass of the rubber component. Furthermore,

the content is preferably 25 parts by mass or less, more preferably 20 parts by mass or less, further preferably 18 parts by mass or less.

(Wax)

The rubber composition for a cap tread according to the present embodiment preferably comprises wax. Therefore, a good TGC resistance can be obtained. Examples of wax include, but not particularly limited to, for example, a wax derived from petroleum resources such as a paraffin wax and a microcrystalline wax, and a natural wax such as a rice wax, beeswax, and sorbitan ester. Among them, a wax comprising a $C_{40-70}$ branched alkane is preferable because good ozone resistance can be obtained in a wide temperature range. In addition, wax may be used alone, or two or more thereof may be used in combination.
A $C_{40-70}$ branched alkane does not bleed unless an environmental temperature is 60°C or higher. Therefore, when a predetermined amount of such a branched wax is compounded, the rubber composition improves in mold releasability without causing whitening even during storage in a warehouse in the summer. Specifically, such a branched wax is considered to instantaneously bleed to a rubber surface at an early stage of initiation of vulcanization and fill micro irregularities on a mold surface, so that it improves releasability from the mold. Furthermore, such a branched wax can solidify into a granule on the rubber surface. Therefore, even when such a branched wax is compounded, the branched wax does not form a hard membrane on the rubber composition to be obtained, does not deteriorate an initial grip, and is less likely to compromise ozone resistance. Moreover, since a bleeding substance of such a branched wax is in a liquid state with a low viscosity on the mold surface at a temperature of 150 to 190°C at the time of mold release, the tire easily comes off from the mold. When the branched alkane has 40 or more carbon atoms, the above-described bleeding easily occurs at a vulcanization temperature (for example, 150 to 200°C). Furthermore, when the branched alkane has 70 or less carbon atoms, the rubber composition exhibits moderate viscosity, and slipperiness between the mold and the tire improves, and the rubber composition easily comes off from the mold. Moreover, the rubber composition exhibits a moderate membrane hardness even in a tire which is used. In addition, such a wax having more than 70 carbon atoms and a molecular weight of more than 1,000 has a high melting point and easily forms a hard membrane. On the other hand, as described above, the $C_{40-70}$ branched alkane of the present embodiment does not form a hard membrane and thus is appropriate for a tire.
A method of setting the content of the $C_{40-70}$ branched alkane to a specific amount is not particularly limited. By way of an example, the rubber composition can comprise a content of the $C_{40-70}$ branched alkane in the above-described ranges by, for example, compounding a wax comprising a predetermined amount of a $C_{40-70}$ branched alkane into the rubber composition. Such wax is not particularly limited. Examples of wax include those manufactured and sold by Nippon Seiro Co., Ltd., and the like.
A content of the $C_{40-70}$ branched alkane is 0.10 parts by mass or more, more preferably 0.12 parts by mass or mor, further preferably 0.15 parts by mass or more, particularly preferably 0.20 parts by mass or more, based on 100 parts by mass of a rubber component, from the viewpoints that it easily bleeds at a high temperature and gives a good releasability from a mold, etc. to a rubber composition to be obtained. Furthermore, it is preferably 6.0 parts by mass or less, more preferably 5.0 parts by mass or less, further preferably 4.0 parts by mass or less, particularly preferably 3.0 parts by mass or less, from the viewpoint of good initial grip and whitening performance.
A melting point of wax is preferably 40°C or higher, preferably 45°C or higher, further preferably 50°C or higher, from the viewpoint of prevention of early blooming and consumption of wax in a short time. Furthermore, it is preferably 90°C or lower, more preferably 85°C or lower, from the viewpoint of ozone resistance. Besides, the melting point is a temperature of a peak top when measured using a differential scanning calorimetry device (DSC). For example, using a differential scanning calorimeter (Thermo plus DSC8230, manufactured by Rigaku Corporation), temperature can be raised at 5°C/min, and a peak top of the obtained melting can be used as a melting point.

(Surfactant)

The rubber composition for a cap tread according to the present embodiment preferably comprises a surfactant. The surfactant blooms to a tire surface together with wax and antioxidant and melts and flattens them, so that it can mitigate white discoloration mainly due to antioxidant, reduce unevenness of a surface protective layer formed on the tire surface, and substantially mitigate brown discoloration that is noticeable due to diffused reflection. Furthermore, it can also give the tire surface a gloss of black shine. Moreover, it can improve ozone resistance and TGC resistance. Use of the above-described wax comprising a branched alkane of 40 to 70 carbon atoms with a surfactant in combination is exemplified as an appropriate aspect.
The surfactant is not particularly limited as long as it has a hydrophilic group and a hydrophobic group, and examples of the surfactant include, for example, a fatty acid metal salt, a fatty acid amide, an ester of a fatty acid amide and a mixture thereof; a nonionic surfactant; a chained ethylene oxide; a polyalkylene glycol, and the like.

Examples of a fatty acid constituting a fatty acid metal salt and a fatty acid amide, include, but not particularly limited to, a saturated or unsaturated fatty acid (preferably, $C_{6-28}$ (more preferably $C_{10-25}$, further preferably $C_{14-20}$) saturated or unsaturated fatty acid), for example, a lauric acid, a myristic acid, a palmitic acid, a stearic acid, an oleic acid, a linoleic acid, a linolenic acid, an arachidic acid, a behenic acid, a nervonic acid, and the like. They can be used alone, or two or more thereof may be used in combination. Among them, a saturated fatty acid is preferable, and a $C_{14-20}$ saturated fatty acid is more preferable.

Examples of a metal constituting a fatty acid metal salt include alkali metals such as potassium and sodium; alkaline earth metals such as magnesium, calcium and barium; zinc, nickel and molybdenum. Among them, zinc and calcium are preferable, and calcium is more preferable.

A saturated fatty acid amide or an unsaturated fatty acid amide may be used as the fatty acid amide. Examples of the saturated fatty acid amide include, for example, N-(1-oxooctadecyl)sarcosine, a stearic acid amide, a behenic acid amide, and the like. Examples of the unsaturated fatty acid amide include, for example, an oleic acid amide, an erucic acid amide, and the like.

Specific examples of the fatty acid metal salt include Ultra-Flow 440 manufactured by Performance Additives, which is a fatty acid zinc salt, and the like. Specific examples of a mixture of the fatty acid metal salt and the fatty acid amide include WB16 manufactured by Struktol Company of America, LCC, which is a mixture of a fatty acid calcium and a fatty acid amide. Specific examples of a mixture of the fatty acid metal salt and the ester of the fatty acid amide include Aflux 16 manufactured by Rhein Chemie, which is a mixture of a fatty acid calcium salt and an amide ester.

Examples of the nonionic surfactant include, for example, a monoester and a diester of ethylene glycol, a sorbitan fatty acid ester, a polyoxyethylene alkyl ether, a pluronic nonionic surfactant, and the like, and among them, a pluronic nonionic surfactant is preferable.

The pluronic nonionic surfactant is also referred to as a polyoxyethylene polyoxypropylene glycol, a polyoxyethylene polyoxypropylene block polymer, and a polypropylene glycol ethylene oxide adduct, and is generally a nonionic surfactant represented by the following formula (I). As represented by the following formula (I), the pluronic nonionic surfactant has hydrophilic groups composed of an ethylene oxide structure on both sides and a hydrophobic group composed of a propylene oxide structure so as to be sandwiched between the hydrophilic groups:

$$HO\!-\!\left[CH_2CH_2O\right]_a\!-\!\left[CH_2\underset{}{\overset{CH_3}{\overset{|}{C}}}HO\right]_b\!-\!\left[CH_2CH_2O\right]_c\!-\!H \qquad (I)$$

wherein a, b, and c represent an integer.

A polymerization degree of a polypropylene oxide block of a pluronic nonionic surfactant (b in the above-described formula (I)) and an addition amount of a polyethylene oxide (a+c in the above-described formula (I)) are not particularly limited. They can be appropriately selected according to conditions of use, purposes, and the like. The higher a proportion of the polypropylene oxide block becomes, the higher the affinity with a rubber tends to be and the slower the rate of moving to the rubber surface tends to be. The polymerization degree of the polypropylene oxide block (b in the above-described formula (I)) is preferably 100 or less, more preferably 10 to 70, from the viewpoint that bloom of the nonionic surfactant can be appropriately controlled. The addition amount of the polyethylene oxide (a+c of the above-described formula (I)) is preferably 100 or less, more preferably 3 to 65. When the polymerization degree of the polypropylene oxide block and the addition amount of the polyethylene oxide are within the above-described ranges, the bloom of the nonionic surfactant can be appropriately controlled in a rubber composition.

Examples of the pluronic nonionic surfactant include those manufactured and sold by BASF Japan Ltd., Sanyo Chemical Industries, Ltd., ADEKA Corporation, DKS Co. Ltd., NOF CORPORATION, etc.

The pluronic nonionic surfactant may bleed within about 2 to 3 days after vulcanization and accelerate bleeding of antioxidant such as a phenylenediamine-based agent. Therefore, such a surfactant may play a complementary role, for example, until a membrane is formed by a wax comprising the above-described branched alkane and the like. Furthermore, such a surfactant may dissolve a non-polar linear alkane wax. Moreover, such a surfactant may penetrate the linear alkane wax and soften a coating to be obtained, making it difficult to be cracked. Therefore, by comprising such a surfactant, a rubber composition can improve in dynamic ozone performance.

Specific examples of the chained ethylene oxide include 50HB-100 and 50HB-2000 manufactured by Sanyo Chemical Industries, Ltd., and the like.

A HLB of a surfactant is preferably 5.0 to 12.0, more preferably 5.5 to 11.5, further preferably 6.0 to 11.0, from the viewpoint of suppressing white discoloration of a rubber. Besides, in the present specification, a HLB means a hydrophilic-lipophilic balance (HLB) value and is calculated by the Oda method. The Oda method is, for example, a method described on page 212 of "Kaimenkasseizai Nyumon (Introduction to Surfactants)" [published by Sanyo Chemical

Industries, Ltd. in 2007, written by Takehiko Fujimoto]. A value of a HLB can be calculated from a ratio of an organicity value to an inorganicity value in the table on page 213 of "Kaimenkasseizai Nyumon (Introduction to Surfactants)" by the following equation:

$$(\mathrm{HLB}) = \{(\mathrm{inorganicity})/(\mathrm{organicity})\} \times 10$$

A SP value of a surfactant is preferably 7.0 to 11.5, more preferably 7.5 to 11.0, further preferably 8.0 to 10.5, from the viewpoint of a good compatibility with a rubber component (particularly SBR). Besides, in the present embodiment, a SP value means a Solubility Parameter calculated by the Hoy method based on a structure of a compound. The Hoy method is a calculation method described in K.L. Hoy "Table of Solubility Parameters", Solvent and Coatings Materials Research and Development Department, Union Carbites Corp. (1985).

A total content of the surfactant and the $C_{40\text{-}70}$ branched alkane is preferably 0.10 parts by mass or more, more preferably 0.20 parts by mass or more, further preferably 0.40 parts by mass or more, particularly preferably 1.2 parts by mass or more, based on 100 parts by mass of a rubber component. Furthermore, the content is preferably 6.0 parts by mass or less, more preferably 5.0 parts by mass or less, further preferably 4.0 parts by mass or less, particularly preferably 3.0 parts by mass or less.

(Filler)

The rubber composition for a cap tread according to the present embodiment preferably comprises carbon black and silica as fillers.

(Carbon black)

As carbon black, those commonly used in the rubber industry can be appropriately used, and examples of carbon black include, for example, GPF, FEF, HAF, ISAF, SAF, and the like. They may be used alone, or two or more thereof may be used in combination.

A nitrogen adsorption specific surface area ($N_2SA$) of carbon black is preferably 50 $m^2/g$ or more, more preferably 70 $m^2/g$ or more, from the viewpoint of elongation at break. Furthermore, it is preferably 200 $m^2/g$ or less, more preferably 150 $m^2/g$ or less, from the viewpoints of fuel efficiency and processability. Besides, the $N_2SA$ of carbon black is a value measured according to JIS K 6217-2 "Carbon black for rubber industry-Fundamental characteristics-Part 2: Determination of specific surface area-Nitrogen adsorption methods-Single-point procedures".

When the rubber composition comprises the carbon black, the content thereof is, from the viewpoint of ultraviolet crack, preferably 3 parts by mass or more, preferably 4 parts by mass or more, more preferably 5 parts by mass or more based on 100 parts by mass of the rubber component. An upper limit of the content of carbon black is not particularly limited, but is preferably 100 parts by mass or less, more preferably 80 parts by mass or less, further preferably 60 parts by mass or less, particularly preferably 25 parts by mass or less, from the viewpoints of fuel efficiency and wet grip performance.

Silica is not particularly limited, and examples of silica include, for example, silica prepared by a dry method (anhydrous silicic acid), silica prepared by a wet method (hydrous silicic acid), and the like. Among them, silica prepared by a wet method is preferable because it has many silanol groups.

A nitrogen adsorption specific surface area ($N_2SA$) of silica is preferably 100 $m^2/g$ or more, more preferably 110 $m^2/g$ or more, from the viewpoint of elongation at break. Furthermore, it is preferably 250 $m^2/g$ or less, more preferably 230 $m^2/g$ or less, from the viewpoints of fuel efficiency and processability. Besides, the $N_2SA$ of silica herein is a value measured by the BET method according to ASTM D3037-93.

When the rubber composition comprises the silica, the content thereof is, from the viewpoint of wet grip performance, preferably 30 parts by mass or more, more preferably 50 parts by mass or more, further preferably 70 parts by mass or more, particularly preferably 80 parts by mass or more based on 100 parts by mass of the rubber component. Furthermore, it is preferably 150 parts by mass or less, more preferably 140 parts by mass or less, further preferably 130 parts by mass or less, from the viewpoints of fuel efficiency and abrasion resistance.

A content of silica in a total of 100% by mass of silica and carbon black is preferably 50% by mass or more, more preferably 60% by mass or more, further preferably 70% by mass or more, particularly preferably 80% by mass or more. Furthermore, the content of silica is preferably 99% by mass or less, more preferably 97% by mass or less, further preferably 95% by mass or less.

A total content of silica and carbon black based on 100 parts by mass of a rubber component is preferably 40 parts by mass or more, more preferably 50 parts by mass or more, further preferably 60 parts by mass or more, from the viewpoint of abrasion resistance. Furthermore, it is preferably 180 parts by mass or less, more preferably 160 parts

by mass or less, further preferably 140 parts by mass or less, from the viewpoints of fuel efficiency and elongation at break.

Silica is preferably used in combination with a silane coupling agent. The silane coupling agent is not particularly limited, and any silane coupling agent conventionally used in combination with silica in the rubber industry can be used. Specific examples of the silane coupling agent include, for example, silane coupling agents having a sulfide group such as bis(3-triethoxysilylpropyl)tetrasulfide, bis(2-triethoxysilylethyl) tetrasulfide, bis(4-triethoxysilylbutyl) tetrasulfide, bis(3-trimethoxysilylpropyl) tetrasulfide, bis(2-trimethoxysilylethyl) tetrasulfide, bis(4-trimethoxysilylbutyl) tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 2-trimethoxysilylethyl-N,N-dimethylthiocarbamoyltetrasulfide, 3-trimethoxysilylpropylbenzothiazolyl tetrasulfide, 3-triethoxysilylpropylbenzothiazole tetrasulfide, and 3-trimethoxysilylpropylmethacrylate monosulfide; silane coupling agents having a mercapto group such as 3-mercaptopropyltrimethoxysilane, 3-mercaptopropyltriethoxysilane, 2-mercaptoethyltrimethoxysilane, 2-mercaptoethyltriethoxysilane, and Si363; silane coupling agents having a thioester group such as 3-octanoylthio-1-propyltriethoxysilane, 3-hexanoylthio-1-propyltriethoxysilane, and 3-octanoylthio-1-propyltrimethoxysilane; silane coupling agents having a vinyl group such as vinyl triethoxysilane; silane coupling agents having an amino group such as 3-aminopropyltriethoxysilane; silane coupling agents having a glycidoxy group such as γ-glycidoxypropyltriethoxysilane; silane coupling agents having a nitro group such as 3-nitropropyltrimethoxysilane; silane coupling agents having a chloro group such as 3-chloropropyltrimethoxysilane, and the like. Among them, silane coupling agents having a sulfide group, silane coupling agents having a mercapto group, and silane coupling agents having a thioester group are preferable. These silane coupling agents may be used alone, or two or more thereof may be used in combination.

When the rubber composition comprises the silane coupling agent, the content thereof is preferably 1 part by mass or more, more preferably 3 parts by mass or more, further preferably 4 parts by mass or more based on 100 parts by mass of the silica. Furthermore, the content of the silane coupling agent is preferably 20 parts by mass or less, preferably 15 parts by mass or less, further preferably 10 parts by mass or less, based on 100 parts by mass of the silica.

As a filler, other fillers may be used in addition to carbon black and silica. Such a filler is not particularly limited, and any filler generally used in this field such as, for example, aluminum hydroxide, alumina (aluminum oxide), calcium carbonate, magnesium sulfate, talc, and clay can be used. These fillers may be used alone, or two or more thereof may be used in combination.

(Softening agent)

The rubber composition for a cap tread according to the present embodiment may comprise a softening agent. By comprising the softening agent, bloom of an antioxidant, a surfactant, and a petroleum-derived wax can be appropriately controlled, and an effect of the present invention can be obtained more favorably. Examples of the softening agent include oil, an adhesive resin, a liquid diene polymer, and the like, which may be appropriately selected in consideration of a transit rate of antioxidant and wax.

As oil, for example, a process oil, a vegetable oil and fat, or a mixture thereof can be used. As the process oil, for example, a paraffin-based process oil, an aroma-based process oil, a naphthen-based process oil, and the like can be used. Among them, an aroma-based process oil is preferable. Specific examples of the paraffin-based process oil include PW-32, PW-90, PW-150, and PS-32 manufactured by Idemitsu Kosan Co., Ltd., and the like. Furthermore, specific examples of the aroma-based process oil include AC-12, AC-460, AH-16, AH-24, and AH-58 manufactured by Idemitsu Kosan Co., Ltd., and the like. Examples of the vegetable oil and fat include a castor oil, a cottonseed oil, a linseed oil, a rapeseed oil, a soybean oil, a palm oil, a coconut oil, a peanut oil, rosin, a pine oil, a pine tar, a tall oil, a corn oil, a rice oil, a safflower oil, a sesame oil, an olive oil, a sunflower oil, a palm kernel oil, a camellia oil, a jojoba oil, a macadamia nut oil, a tung oil, and the like. They may be used alone, or two or more thereof may be used in combination.

As the adhesive resin, aromatic hydrocarbon-based resins such as a phenol resin, an alkylphenol resin, a terpene-based resin, a cumarone resin, an indene resin, a cumarone indene resin, a styrene resin, an α-methylstyrene resin, an α-methylstyrene/styrene resin, an acrylic resin, a rosin resin, and a dicyclopentadiene resin (DCPD resin), aliphatic hydrocarbon resins such as a C5 resin, a C8 resin, a C9 resin, and a C5/C9 resin, and the like, which are commonly used in the tire industry. Furthermore, these resins may be hydrogenated. Among them, a terpene-based resin, a cumarone indene resin, an α-methylstyrene resin, a rosin resin, and a dicyclopentadiene resin are preferable, and a terpene styrene resin, a cumarone indene resin, and an α-methylstyrene resin are more preferable. Any one of the above-exemplified resin components may be used alone, or two or more thereof may be used in combination.

The terpene-based resin has a lower SP value than other adhesive resins such as an aliphatic petroleum-based resin, an aromatic petroleum-based resin, a phenol-based resin, a cumarone indene resin, and a rosin-based

resin, and the SP value is between a SBR (SP value: 8.9) and a BR (SP value: 8.2), which is preferable from the viewpoint of compatibility with a rubber component. Among them, a terpene styrene resin is appropriately used because it has a good compatibility particularly with both a SBR and a BR and sulfur becomes easily dispersed in a rubber component.

A polyterpene resin is a resin made from at least one selected from terpene compounds such as α-pinene, β-pinene, limonene, and dipentene, as a raw material. A terpene phenol resin is a resin made from the terpene compound and a phenol-based compound, as raw materials. A terpene styrene resin is a resin made from the terpene compound and styrene, as raw materials. The polyterpene resin and the terpene styrene resin may be a hydrogenated resin (a hydrogenated polyterpene resin, a hydrogenated terpene styrene resin). Hydrogenation to the terpene-based resin can be performed by a known method, or a commercially available hydrogenated resin can also be used.

Any one of the above-exemplified terpene-based resins may be used alone, or two or more thereof may be used in combination. In the present embodiment, a commercially available product may be used as a terpene-based resin. Examples of such a commercially available product include those manufactured and sold by Yasuhara Chemical Co., Ltd.

The cumarone indene resin is a resin comprising cumarone and indene. Examples of the cumarone indene resin include those manufactured and sold by Ruetger, Nitto Chemical Co., Ltd., Nippon Steel Chemical Co., Ltd., Nippon Petrochemicals Co., Ltd., etc.

The α-methylstyrene resin means a resin comprising α-methylstyrene as a main monomer component constituting a skeleton (main chain) of resin and includes, for example, an α-methylstyrene polymer, a copolymer of α-methylstyrene and styrene, and the like. These α-methylstyrene resins may be used alone, or two or more thereof may be used in combination. In the present embodiment, a commercially available product may be used as an α-methylstyrene resin. Specific examples of such a commercial product include those manufactured and sold by Arizona Chemical Company, etc.

When the rubber composition comprises the adhesive resin, the content thereof is, from the viewpoints of abrasion resistance and wet grip performance, preferably 0.1 parts by mass or more, more preferably 0.5 parts by mass or more, further preferably 1.0 part by mass or more based on 100 parts by mass of the rubber component. Furthermore, it is preferably 20 parts by mass or less, more preferably 15 parts by mass or less, further preferably 12 parts by mass or less, from the viewpoints of abrasion resistance and wet grip performance.

A softening point of the adhesive resin is preferably 160°C or lower, more preferably 145°C or lower, further preferably 125°C or lower, from the viewpoint of a good grip performance. Furthermore, the softening point is preferably 0°C or higher, more preferably 20°C or higher, further preferably 30°C or higher, from the viewpoint of a good grip performance. Besides, in the present embodiment, the softening point is a temperature at which a sphere drops when the softening point specified in JIS K 6220-1: 2001 is measured with a ring and ball softening point measuring device. In addition, Koresin (softening point: 145°C, manufactured by BASF), which is preferably used in racing tires, has a good grip performance, but easily causes a problem of strong adhesion with equipment.

A glass transition temperature (Tg) of the adhesive resin is preferably 110°C or lower, more preferably 105°C or lower, further preferably 100°C or lower, from the viewpoint of a good compatibility with a rubber component. Furthermore, it is preferably -35°C or higher, more preferably 0°C or higher, further preferably 30°C or higher, from the viewpoint of a good compatibility with a rubber component.

A weight-average molecular weight (Mw) of the adhesive resin is preferably 300 or more, more preferably 400 or more, further preferably 500 or more, from the viewpoints of being less likely to volatilize and having a good grip performance. Furthermore, the Mw is preferably 15,000 or less, more preferably 13,000 or less, further preferably 11,000 or less.

A SP value of the adhesive resin is preferably in the range of 8 to 11, more preferably in the range of 8.2 to 10, further preferably in the range of 8.5 to 9.0, from the viewpoint of a good compatibility with a rubber component (particularly a SBR). When a resin having a SP value within the above-described ranges is used, compatibility with a SBR and a BR can be improved, and abrasion resistance and elongation at break can also be improved.

(Other components)

The rubber composition for a tread according to the present embodiment can appropriately comprise compounding agents generally used in the rubber industry, for example, a fatty acid (preferably a stearic acid), zinc oxide, a vulcanizing agent, a vulcanization accelerator, and the like, in addition to the above-described components.

When the rubber composition comprises the fatty acid, the content thereof is, from the viewpoint of a vulcanization rate, preferably 0.2 parts by mass or more, more preferably 1 part by mass or more based on 100 parts by mass of the rubber component. Furthermore, it is preferably 10 parts by mass or less, more preferably 5 parts by mass or less, from the viewpoint of processability.

When the rubber composition comprises the zinc oxide, the content thereof is, from the viewpoint of a vulcanization rate, preferably 0.5 parts by mass or more, more preferably 1 part by mass or more based on 100 parts by mass

of the rubber component. Furthermore, it is preferably 10 parts by mass or less, more preferably 5 parts by mass or less, from the viewpoint of abrasion resistance.

Sulfur is appropriately used as a vulcanizing agent. As sulfur, a powdered sulfur, an oil-treated sulfur, a precipitated sulfur, a colloidal sulfur, an insoluble sulfur, a highly dispersible sulfur, and the like can be used.

When the rubber composition comprises sulfur as a vulcanizing agent, the content thereof is, from the viewpoints of ensuring a sufficient vulcanization reaction and obtaining good vulcanization adhesion with an adjacent rubber, preferably 0.1 parts by mass or more, more preferably 0.3 parts by mass or more, further preferably 0.5 parts by mass or more based on 100 parts by mass of the rubber component. Furthermore, it is preferably 3.0 parts by mass or less, more preferably 2.5 parts by mass or less, from the viewpoint of deterioration. Besides, in the present specification, the content of sulfur means a total content of pure sulfur contents of a vulcanizing agent compounded in a rubber composition. Here, the pure sulfur content means, for example, a content of sulfur comprised in an oil-containing sulfur when the oil-containing sulfur is used as a vulcanizing agent and also means a sulfur atom comprised in a compound (for example, alkylphenol/ sulfur chloride condensate) when the compound containing a sulfur atom is used as a vulcanizing agent.

Examples of a vulcanizing agent other than sulfur include, for example, vulcanizing agents containing a sulfur atom such as TACKIROL V-200 manufactured by Taoka Chemical Co., Ltd., DURALINK HTS (1,6-hexamethylene-dithioic sodium sulfate dihydrate) manufactured by Flexsys, and KA9188 (1,6-bis(N,N'-dibenzylthiocarbamoyl dithio)hexane) manufactured by LANXESS, a cyclic polysulfide represented by formula (II):

(R − S$_x$)$_n$

(II)

wherein, x indicates an integral of 2 to 6, n indicates an integral of 1 to 15, and R indicates an alkylene group including a $C_{2\text{-}18}$ alkylene group which may be substituted or a $C_{2\text{-}18}$ oxyalkylene group which may be substituted, and a chain polysulfide (preferably a polysulfide having a molecular weight of several thousands to tens of thousands), an organic peroxides such as a dicumyl peroxide, and the like.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators. These vulcanization accelerators may be used alone, or two or more thereof may be used in combination. Among them, sulfenamide-based vulcanization accelerators are preferable since they have good vulcanization characteristics and good fuel efficiency in physical properties of a rubber after vulcanization, for example, N-tert-butyl-2-benzothiazolylsulfenamide (TBBS), N-cyclohexyl-2-benzothiazolylsulfenamide (CZ), N,N'-dicyclohexyl-2-benzothiazolylsulfenamide (DZ), and the like.

When the rubber composition comprises the vulcanization accelerator, the content thereof is, from the viewpoint of securing a sufficient vulcanization rate, preferably 0.5 parts by mass or more, preferably 1.0 part by mass or more, further preferably 3.0 parts by mass or more based on 100 parts by mass of the rubber component. Furthermore, it is preferably 15 parts by mass or less, more preferably 10 parts by mass or less, further preferably 5 parts by mass or less, from the viewpoint of suppressing blooming.

As a method of manufacturing a rubber composition for a cap tread, a known method can be used. For example, the rubber composition can be manufactured by a method of kneading each of the above-described components using a rubber kneading device such as an open roll and a Banbury mixer, and then vulcanizing the kneaded product, etc.

<Jointless band>

As described above, the jointless band is a member configured to coat a fiber cord with a rubber composition for coating a fiber cord.

Examples of a rubber component that can be used in the rubber composition for coating a fiber cord include rubbers similar to the rubber component that can be used for a rubber composition for a cap tread, and the like. They may be used alone, or two or more thereof may be used in combination. Among them, diene-based rubbers are preferable because they have a good cord adhesiveness and can be appropriately applied to applications for the jointless band. Furthermore, among the diene-based rubbers, isoprene-based rubbers, SBRs, and BRs are preferable, and isoprene-based rubbers and SBRs are more preferably used in combination, because good steering stability, fuel efficiency, elongation at break, durability, and crack resistance can be obtained.

A content of a diene-based rubber in 100% by mass of a rubber component is preferably 70% by mass or more, more preferably 80% by mass or more, further preferably 90% by mass or more. Furthermore, a rubber component may

be composed of a diene-based rubber only.

As an isoprene-based rubber and a SBR, an isoprene-based rubber and a SBR similar to those for the rubber composition for a cap tread can be appropriately used in the similar manner.

A content of an isoprene-based rubber when compounded in 100% by mass of a rubber component is preferably 30% by mass or more, more preferably 60% by mass or more, from the viewpoint of elongation at break. Furthermore, the content is preferably 90% by mass or less, more preferably 80% by mass or less.

A content of a SBR when compounded in 100% by mass of a rubber component is preferably 10% by mass or more, more preferably 20% by mass or more. Furthermore, the content is preferably 70% by mass or less, more preferably 40% by mass or less.

A total content of an isoprene-based rubber and a SBR in 100% by mass of a rubber component is preferably 70% by mass or more, more preferably 80% by mass or more. Furthermore, a rubber component may be composed of an isoprene-based rubber and a SBR only.

A content of a phenylenediamine-based antioxidant in a rubber composition for coating a fiber cord is preferably 1% by mass or less, more preferably 0.5% by mass or less, further preferably a phenylenediamine-based antioxidant is not substantially compounded, and specifically, the content is particularly preferably 0.05% by mass or less, most preferably 0.01% by mass or less, in 100% by mass of a rubber composition for coating a fiber cord, from the viewpoints of processability and prevention of rubber burning. On the other hand, from the viewpoint of TGC resistance, it is preferably 0.5 to 1% by mass.

The rubber composition for coating a fiber cord may comprise wax. As wax, wax similar to those for the rubber composition for a cap tread can be appropriately used in the similar manner.

When the rubber composition comprises the wax, the content thereof is preferably 4.0 parts by mass or less, more preferably 2.0 parts by mass or less based on 100 parts by mass of the rubber component.

The rubber composition for coating a fiber cord preferably comprises carbon black. As carbon black, carbon black similar to those for the rubber composition for a cap tread can be appropriately used in the similar manner.

When the rubber composition comprises the carbon black, the content thereof is preferably 20 to 80 parts by mass, more preferably 25 to 70 parts by mass, further preferably 30 to 60 parts by mass based on 100 parts by mass of the rubber component.

The rubber composition for coating a fiber cord preferably comprises silica. As silica, silica similar to those for the rubber composition for a cap tread can be appropriately used in the similar manner.

When the rubber composition comprises the silica, the content thereof is preferably 5 to 60 parts by mass, more preferably 5 to 20 parts by mass based on 100 parts by mass of the rubber component.

The rubber composition for coating a fiber cord can comprise compounding agents generally used in manufacturing of a rubber composition, such as, for example, a softening agent, a resin component, stearic acid, zinc oxide, a vulcanizing agent, and a vulcanization accelerator, in addition to the above-described components.

As a method of manufacturing a rubber composition for coating a fiber cord, a known method can be used. For example, the rubber composition can be manufactured by a method of kneading each of the above-described components using a rubber kneading device such as an open roll and a Banbury mixer, and then vulcanizing the kneaded product, etc.

The pneumatic tire according to the present embodiment is manufactured by a usual method using the above-described rubber compositions. That is, the tire can be manufactured by extruding a rubber composition comprising various additives as needed into a shape of each tire member such as a cap tread at an unvulcanization stage (in the case of a jointless band, clamping and coating a sheet-shaped rubber composition for coating a fiber cord to the fiber cord from above and below into a shape of a jointless band at the unvulcanization stage), molding the extruded product on a tire molding machine by a usual method, and attaching the molded product together with other tire members to form an unvulcanized tire, followed by heating and pressurizing the unvulcanized tire in a vulcanizer.

Examples of the fiber cord include a cord obtained from fibers such as polyethylene, nylon, aramid, a glass fiber, polyester, polyketone, rayon, and polyethylene terephthalate. Furthermore, a hybrid cord obtained from a plurality of types of fibers may be used.

## EXAMPLE

Although the present invention will be described based on examples, it is not limited to the examples only. Examples 16 and 19 are comparative examples and not according to the present invention.

Various chemicals used in Examples and Comparative examples are shown below.

SBR1: N9548 manufactured by Zeon Corporation (styrene content: 35% by mass, vinyl content: 35% by mass, Mw: 1,090,000, oil-extended in a content of 37.5 parts by mass based on 100 parts by mass of a rubber component)

SBR2: NS612 manufactured by Zeon Corporation (styrene content: 15% by mass, vinyl content: 30% by mass, Mw: 780,000, not oil-extended)

BR: CB25 manufactured by LANXESS (BR synthesized using a neodymium (Nd) based catalyst (Nd-BR), cis content: 97% by mass, vinyl content: 0.7% by mass, Mw: 500,000)
Carbon black 1: Show Black N351H manufactured by Cabot Japan K.K. ($N_2SA$: 69 $m^2/g$)
Carbon black 2: Show Black N220 manufactured by Cabot Japan K.K. ($N_2SA$: 111 $m^2/g$)
Silica: ULTRASIL VN3 manufactured by Evonik Degussa GmbH ($N_2SA$: 175$m^2/g$)
Silane coupling agent 1: Si75 manufactured by Evonik Degussa GmbH (bis(3-triethoxysilylpropyl)disulfide)
Silane coupling agent 2: NXT-Z45 manufactured by Momentive Performance Materials (silane coupling agent having a mercapto group)
Adhesive resin 1: Sylvatraxx 4401 manufactured by Arizona Chemical Company ($\alpha$-methylstyrene resin, softening point: 85°C, Tg: 43°C, SP value: 9.1, Mw: 700)
Adhesive resin 2: YS resin TO125 manufactured by Yasuhara Chemical Co., Ltd. (terpene styrene resin, softening point: 125°C, Tg: 64°C, SP value: 8.7, Mw: 800)
Adhesive resin 3: NOVARES C10 manufactured by Ruetgers Chemicals (liquid cumarone indene resin, softening point: 10°C, Tg: -30°C, SP value: 8.8, Mw: 350)
Surfactant 1: STRUKTOL WB16 manufactured by Schill+Seilacher GmbH (mixture of a fatty acid ester and a fatty acid metal salt, HLB: 8.3, SP value: 10.0)
Surfactant 2: NEWPOL PE-64 manufactured by Sanyo Chemical Industries, Ltd. (pluronic nonionic surfactant, HLB: 10.9, SP value: 9.2)
Surfactant 3: PEG4000N manufactured by Sanyo Chemical Industries, Ltd. (polyethylene glycol, HLB: 19.5, SP value: 9.6)
Surfactant 4: Stearic acid "Camellia" manufactured by NOF CORPORATION (HLB: 4.2, SP value: 9.1)
Wax 1: OZOACE 355 manufactured by Nippon Seiro Co., Ltd. (paraffin wax, branched alkane of 40 to 70 carbon atoms: 8.3% by mass, melting point: 70°C)
Wax 2: Hi-Mic 1080 manufactured by Nippon Seiro Co., Ltd. (microcrystalline wax, branched alkane of 40 to 70 carbon atoms: 47.0% by mass, melting point: 84°C)
Oil 1: VivaTec 500 manufactured by H 8v R Group (TDAE oil)
Oil 2: Diana process AH-24 manufactured by Idemitsu Kosan Co., Ltd. (aroma-based process oil)
Phenylenediamine-based antioxidant 1: Vulkanox 4020 manufactured by LANXESS (N-(1,3-dimethylbutyl)-N'-phenyl-p-phenylenediamine (6PPD))
Phenylenediamine-based antioxidant 2: Vulkanox 4030 manufactured by LANXESS (N,N'-bis(1,4-dimethylpentyl)-p-phenylenediamine (77PD))
Phenylenediamine-based antioxidant 3: Vulkanox DPPD manufactured by LANXESS (N,N'-diphenyl-p-phenylenediamine (DPPD))
Bisphenol-based antioxidant 1: NS-6 manufactured by Ouchi Shinko Chemical Industrial Co., Ltd. (2,2'-methylenebis (4-methyl-6-tert-butylphenol))
Bisphenol-based antioxidant 2: NS-30 manufactured by Ouchi Shinko Chemical Industrial Co., Ltd. (4,4'-butylidebis(3-methyl-6-tert-butylphenol))
Quinoline-based antioxidant: Nocrac 224 manufactured by Ouchi Shinko Chemical Industrial Co., Ltd. (2,2,4-trimethyl-1,2-dihydroquinoline polymer (TMQ))
Zinc oxide 1: Ginrei R manufactured by Toho Zinc Co., Ltd.
Zinc oxide 2: Zinc flower No.2 manufactured by Mitsui Mining 8v Smelting Co., Ltd.
SUMIKANOL 620: SUMIKANOL 620 manufactured by Taoka Chemical Co., Ltd. (modified resorcinol resin (modified resorcinol/formaldehyde condensate))
SUMIKANOL 507A: SUMIKANOL 507A manufactured by Sumitomo Chemical Co., Ltd. (modified etherified methylolmelamine resin (partial condensate of hexamethylolmelamine pentamethyl ether (HMMPME)), comprising 35% by mass of silica and oil)
Stearic acid: Stearic acid "Camellia" manufactured by NOF CORPORATION
Sulfur 1: insoluble sulfur comprising 10% of oil: Seimi sulfur manufactured by Nippon Kanryu Industry Co., Ltd. (insoluble sulfur having 60% or more insolubles derived from carbon disulfide, oil content: 10% by mass)
Sulfur 2: HK-200-5 manufactured by Hosoi Chemical Industry Co., Ltd. (powdered sulfur comprising 5% by mass of oil)
Vulcanization accelerator 1: Nocceler NS manufactured by Ouchi Shinko Chemical Industrial Co., Ltd. (N-tert-butyl-2-benzothiazolyl sulfeneamide (TBBS))
Vulcanization accelerator 2: Nocceler D manufactured by Ouchi Shinko Chemical Industrial Co., Ltd. (diphenylguanidine (DPG))

(Examples and Comparative examples)

According to the compounding formulations shown in Tables 1 to 3, using a 1.7 L Banbury mixer manufactured

by Kobe Steel, Ltd., all chemicals other than sulfur and vulcanization accelerators were kneaded. Next, sulfur and vulcanization accelerators were added to the obtained kneaded product and then kneaded using an open roll to obtain an unvulcanized rubber composition. The obtained unvulcanized rubber composition was used to be molded into a shape of a cap tread and a jointless band, attached together with other tire members to prepare an unvulcanized tire, and vulcanized at 170°C to obtain a test tire (205/65R15, 8.7 kg). Besides, the test tire was prepared with a tread pattern of a five-main groove structure, a subtread structure being subject to the specifications shown in Tables 2 and 3, and nylon 6,6 (1400d-tex/2, cord diameter: 0.54 mm) manufactured by Asahi Kasei Corporation being used as a fiber cord. Performance of the obtained test tire was evaluated by the following test.

<Processability test>

For each unvulcanized JLB rubber composition (Compounding 1 and Compounding 2), a rubber sheet was pressure-bonded to a fiber cord fabric (diameter: 1.7 m) with a roll, wound up, and then cut into a tape shape of 10 cords. The appearance was visually inspected, and a minor defect rate was determined with those having no take-off and tear-off of a rubber and rubber burning being regarded as quality products. The inverse values of the obtained minor defect rate were expressed as indexes as Compounding 1 being 100. The results show that the larger the index is, the lower the defect rate is.

<Wet grip performance>

Each test tire was mounted to all wheels of an actual test vehicle (domestic FF vehicle, displacement: 2000 cc), and a braking distance from an initial speed of 100 km/h on a wet road surface was measured. It was expressed as an index as Comparative example 1 being 100 by the following equation. The results show that the larger the index is, the better the wet grip performance is. A performance target value shall be 100 or more, preferably 105 or more.

$$\text{(Wet grip performance index)} = \text{(braking distance of tire in Comparative example 1)}/\text{(braking distance of each test tire)} \times 100$$

<TGC resistance>

For the obtained test tires, 12 tires were stacked horizontally in a warehouse in the Osaka area and stored for 3 months. Due to the total weight of the upper tires (as an actual load, a load of 8.7 kg × 11 tires is transmitted from the upper tires), ozone cracks become likely to occur at the bottom of the main groove of the lower tire, and thus after the storage for 3 months, a degree of TGC occurrence in the main groove of the bottom tire, which is deformed the most, was observed, and it was expressed as an index as the result of Comparative example 1 being 100. The results show that the larger the index is, the higher the TGC resistance is, and the better the TGC can be suppressed. A performance target value shall be 100 or more.

Table 1

| | JLB compounding kind | |
|---|---|---|
| | Compounding 1 | Compounding 2 |
| Compounding amount (part by mass) | | |
| NR | 70 | 70 |
| SBR | 30 | 30 |
| Carbon black 1 | 45 | 45 |
| Phenylenediamine-based antioxidant 1 | - | 1.0 |
| Quinoline-based antioxidant | 2.0 | 2.0 |
| Zinc oxide 1 | 7.0 | 7.0 |
| SUMIKANOL 620 | 1.0 | 1.0 |
| Stearic acid | 3.0 | 3.0 |
| SUMIKANOL 507A | 1.5 | 1.5 |
| Sulfur 1 | 3.75 | 3.75 |

(continued)

| | JLB compounding kind | |
|---|---|---|
| | Compounding 1 | Compounding 2 |
| Compounding amount (part by mass) | | |
| Vulcanization accelerator 1 | 1.0 | 1.0 |
| Processability of JLB rubber | 100 | 90 |

Table 2-1

| | Example | | | | | | | | | |
|---|---|---|---|---|---|---|---|---|---|---|
| | 1 | 2 | 3 | 4 | 5 | 6 | 7 | 8 | 9 | 10 |
| Compounding amount (part by mass) | | | | | | | | | | |
| SBR 1 | 41.25 | 41.25 | 41.25 | 41.25 | 41.25 | 41.25 | 41.25 | 41.25 | 41.25 | 41.25 |
| SBR 2 | 50 | 50 | 50 | 50 | 50 | 50 | 50 | 50 | 50 | 50 |
| BR | 20 | 20 | 20 | 20 | 20 | 20 | 20 | 20 | 20 | 20 |
| Carbon black 2 | 5.0 | 5.0 | 5.0 | 5.0 | 5.0 | 5.0 | 5.0 | 5.0 | 5.0 | 5.0 |
| Silica | 100 | 100 | 100 | 100 | 100 | 100 | 100 | 100 | 100 | 100 |
| Silane coupling agent 1 | 8.0 | 8.0 | 8.0 | 8.0 | 8.0 | 8.0 | 8.0 | 8.0 | 8.0 | 8.0 |
| Silane coupling agent 2 | - | - | - | - | - | - | - | - | - | - |
| Adhesive resin 1 | 10 | 10 | 10 | 10 | 10 | 10 | 10 | 10 | 10 | 10 |
| Adhesive resin 2 | - | - | - | - | - | - | - | - | - | - |
| Adhesive resin 3 | - | - | - | - | - | - | - | - | - | - |
| Surfactant 1 | 2.0 | 2.0 | 2.0 | 2.0 | 2.0 | 2.0 | - | - | 2.0 | - |
| Surfactant 2 | - | - | - | - | - | - | 2.0 | - | - | - |
| Surfactant 3 | - | - | - | - | - | - | - | 2.0 | - | - |
| Wax 1 | 1.76 | 1.76 | 1.76 | 1.76 | 1.76 | 1.76 | 1.76 | 1.76 | 1.76 | 0.76 |
| Wax 2 | - | - | - | - | - | - | - | - | - | 1.00 |
| ($C_{40-70}$ branched alkane contained in the above wax) | 0.15 | 0.15 | 0.15 | 0.15 | 0.15 | 0.15 | 0.15 | 0.15 | 0.15 | 0.53 |
| Phenylenediamine-based antioxidant 1 | 4.0 | 8.0 | 4.0 | 4.0 | - | 6.0 | 4.0 | 4.0 | 8.0 | 4.0 |
| Phenylenediamine-based antioxidant 2 | - | - | - | - | 4.0 | - | - | - | - | - |
| Phenylenediamine-based antioxidant 3 | - | - | - | - | - | - | - | - | - | - |
| Bisphenol-based antioxidant 1 | - | - | - | 4.0 | - | - | - | - | - | - |
| Bisphenol-based antioxidant 2 | 4.0 | 8.0 | 4.0 | - | 4.0 | - | 4.0 | 4.0 | 8.0 | 4.0 |
| Quinoline-based antioxidant | 1.0 | 1.0 | 1.0 | 1.0 | 1.0 | 3.0 | 1.0 | 1.0 | 1.0 | 1.0 |
| Stearic acid | 3.0 | 3.0 | 3.0 | 3.0 | 3.0 | 3.0 | 3.0 | 3.0 | 3.0 | 3.0 |
| Process oil | 14 | 6.0 | 14 | 14 | 14 | 14 | 14 | 14 | 6.0 | 14 |
| Zinc oxide 2 | 2.0 | 2.0 | 2.0 | 2.0 | 2.0 | 2.0 | 2.0 | 2.0 | 2.0 | 2.0 |
| Sulfur 2 | 1.5 | 1.5 | 1.5 | 1.5 | 1.5 | 1.5 | 1.5 | 1.5 | 1.5 | 1.5 |
| Vulcanization accelerator 1 | 1.3 | 1.3 | 1.3 | 1.3 | 1.3 | 1.3 | 1.3 | 1.3 | 1.3 | 1.3 |
| Vulcanization accelerator 2 | 2.5 | 2.5 | 2.5 | 2.5 | 2.5 | 2.5 | 2.5 | 2.5 | 2.5 | 2.5 |

(continued)

| | Example | | | | | | | | | |
|---|---|---|---|---|---|---|---|---|---|---|
| | 1 | 2 | 3 | 4 | 5 | 6 | 7 | 8 | 9 | 10 |
| Compounding amount (part by mass) | | | | | | | | | | |
| JLB compounding kind | 1 | 1 | 1 | 1 | 1 | 1 | 1 | 1 | 1 | 1 |
| Subtread gauge (mm) | 2.0 | 2.0 | 0.5 | 2.0 | 2.0 | 2.0 | 2.0 | 2.0 | 0.5 | 2.0 |
| Index | | | | | | | | | | |
| Wet grip performance | 115 | 125 | 120 | 110 | 110 | 111 | 114 | 113 | 130 | 120 |
| TGC resistance | 115 | 125 | 105 | 108 | 112 | 114 | 120 | 119 | 105 | 115 |

Table 2-2

| | Example | | | | | | | | |
|---|---|---|---|---|---|---|---|---|---|
| | 11 | 12 | 13 | 14 | 15 | 16 | 17 | 18 | 19 |
| Compounding amount (part by mass) | | | | | | | | | |
| SBR 1 | 41.25 | 41.25 | 41.25 | 41.25 | 41.25 | 41.25 | 41.25 | 41.25 | 41.25 |
| SBR 2 | 50 | 50 | 50 | 50 | 50 | 50 | 50 | 50 | 50 |
| BR | 20 | 20 | 20 | 20 | 20 | 20 | 20 | 20 | 20 |
| Carbon black 2 | 5.0 | 5.0 | 5.0 | 5.0 | 5.0 | 5.0 | 5.0 | 19 | 5.0 |
| Silica | 100 | 100 | 100 | 120 | 120 | 120 | 100 | 80 | 100 |
| Silane coupling agent 1 | 8.0 | 8.0 | - | 9.6 | 9.6 | 9.6 | 8.0 | 6.4 | 8.0 |
| Silane coupling agent 2 | - | - | 8.0 | - | - | - | - | - | - |
| Adhesive resin 1 | 10 | - | 10 | 10 | 10 | 10 | 10 | 10 | 10 |
| Adhesive resin 2 | - | - | - | - | - | - | - | - | 10 |
| Adhesive resin 3 | - | 20 | - | - | - | - | - | - | - |
| Surfactant 1 | - | 2.0 | 2.0 | - | - | 1.0 | 2.0 | 2.0 | 2.0 |
| Surfactant 2 | - | - | - | - | - | - | - | - | - |
| Surfactant 3 | - | - | - | - | - | - | | - | - |
| Wax 1 | - | 1.76 | 1.76 | 0.76 | 0.76 | 0.76 | 1.76 | 0.76 | 1.76 |
| Wax 2 | 1.00 | - | - | 1.00 | 1.00 | 1.00 | - | 1.00 | |
| ($C_{40-70}$ branched alkane contained in the above wax) | 0.47 | 0.15 | 0.15 | 0.53 | 0.53 | 0.53 | 0.15 | 0.53 | 0.15 |
| Phenylenediamine-based antioxidant 1 | 4.0 | 4.0 | 4.0 | 4.0 | 8.0 | 3.0 | 4.0 | 8.0 | 2.0 |
| Phenylenediamine-based antioxidant 2 | - | - | - | - | - | - | - | - | - |
| Phenylenediamine-based antioxidant 3 | 2.0 | - | - | - | - | - | - | - | - |
| Bisphenol-based antioxidant 1 | - | - | - | - | - | - | - | - | - |
| Bisphenol-based antioxidant 2 | 4.0 | 4.0 | 4.0 | 4.0 | 8.0 | - | 4.0 | 8.0 | - |
| Quinoline-based antioxidant | 1.0 | 1.0 | 1.0 | 1.0 | 1.0 | - | 1.0 | 1.0 | 1.0 |
| Stearic acid | 3.0 | 3.0 | 3.0 | 3.0 | 3.0 | 3.0 | 3.0 | 3.0 | 3.0 |
| Process oil | 14 | 4.0 | 14 | 30 | 22 | 30 | 14 | 6.0 | 10 |
| Zinc oxide 2 | 2.0 | 2.0 | 2.0 | 2.0 | 2.0 | 2.0 | 2.0 | 2.0 | 2.0 |
| Sulfur 2 | 1.5 | 1.5 | 1.5 | 1.5 | 1.5 | 1.5 | 1.5 | 1.5 | 1.5 |
| Vulcanization accelerator 1 | 1.3 | 1.3 | 2.4 | 1.3 | 1.3 | 1.3 | 1.3 | 1.3 | 1.3 |
| Vulcanization accelerator 2 | 2.5 | 2.5 | | 2.5 | 2.5 | 2.5 | 2.5 | 2.5 | 2.5 |

(continued)

| | Example | | | | | | | | |
|---|---|---|---|---|---|---|---|---|---|
| | 11 | 12 | 13 | 14 | 15 | 16 | 17 | 18 | 19 |
| Compounding amount (part by mass) | | | | | | | | | |
| JLB compounding kind | 1 | 1 | 1 | 1 | 1 | 1 | 2 | 1 | 1 |
| Subtread gauge (mm) | 2.0 | 2.0 | 2.0 | 2.0 | 0.5 | 2.0 | 2.0 | 2.0 | 2.0 |
| Index | | | | | | | | | |
| Wet grip performance | 120 | 120 | 119 | 134 | 150 | 120 | 113 | 110 | 108 |
| TGC resistance | 115 | 115 | 117 | 111 | 120 | 105 | 118 | 115 | 102 |

Table 3

| | | Comparative example | | | | | |
|---|---|---|---|---|---|---|---|
| | | 1 | 2 | 3 | 4 | 5 | 6 |
| Compounding amount (part by mass) | | | | | | | |
| | SBR 1 | 41.25 | 41.25 | 41.25 | 41.25 | 41.25 | 41.25 |
| | SBR 2 | 50 | 50 | 50 | 50 | 50 | 50 |
| | BR | 20 | 20 | 20 | 20 | 20 | 20 |
| | Carbon black 2 | 5.0 | 5.0 | 5.0 | 19 | 19 | 5.0 |
| | Silica | 100 | 100 | 100 | 80 | 80 | 80 |
| | Silane coupling agent 1 | 8.0 | 8.0 | 8.0 | 6.4 | 6.4 | 6.4 |
| | Silane coupling agent 2 | - | - | - | - | - | - |
| | Adhesive resin 1 | 10 | 10 | 10 | 10 | 10 | 10 |
| | Adhesive resin 2 | - | - | - | - | - | - |
| | Adhesive resin 3 | - | - | - | - | - | - |
| | Surfactant 1 | 2.0 | 2.0 | 2.0 | 2.0 | 2.0 | 2.0 |
| | Surfactant 2 | - | - | - | - | - | - |
| | Surfactant 3 | - | - | - | - | - | - |
| | Wax 1 | 1.76 | 1.76 | 1.76 | 1.76 | 1.76 | 1.76 |
| | Wax 2 | - | - | - | - | - | - |
| ($C_{40-70}$ branched alkane contained in the above wax) | | 0.15 | 0.15 | 0.15 | 0.15 | 0.15 | 0.15 |
| | Phenylenediamine-based antioxidant 1 | 2.0 | 4.0 | 2.0 | 8.0 | 2.0 | 2.0 |
| | Phenylenediamine-based antioxidant 2 | - | - | - | - | - | - |
| | Phenylenediamine-based antioxidant 3 | - | - | - | - | - | - |
| | Bisphenol-based antioxidant 1 | - | - | - | - | - | - |
| | Bisphenol-based antioxidant 2 | - | 4.0 | - | 8.0 | - | - |
| | Quinoline-based antioxidant | 1.0 | 1.0 | 1.0 | 1.0 | 1.0 | 1.0 |
| | Stearic acid | 3.0 | 3.0 | 3.0 | 3.0 | 3.0 | 3.0 |
| | Process oil | 20 | 14 | 20 | 6.0 | 20 | 6.0 |
| | Zinc oxide 2 | 2.0 | 2.0 | 2.0 | 2.0 | 2.0 | 2.0 |
| | Sulfur 2 | 1.5 | 1.5 | 1.5 | 1.5 | 1.5 | 1.5 |
| | Vulcanization accelerator 1 | 1.3 | 1.3 | 1.3 | 1.3 | 1.3 | 1.3 |
| | Vulcanization accelerator 2 | 2.5 | 2.5 | 2.5 | 2.5 | 2.5 | 2.5 |
| JLB compounding kind | | 1 | 1 | 1 | 1 | 1 | 1 |
| Subtread gauge (mm) | | 2.0 | 4.0 | 0.5 | 0 | 2.0 | 2.0 |
| Index | | | | | | | |
| | Wet grip performance | 100 | 99 | 110 | 130 | 90 | 85 |
| | TGC resistance | 100 | 125 | 80 | 95 | 106 | 106 |

From the results in Tables 1 to 3, it can be found that the pneumatic tire of the present invention, in which a predetermined amount of antioxidant was compounded to the rubber composition for a cap tread and a subtread thickness at the bottom of tread main grooves was set to be 0.1 to 3.0 mm, has good TGC resistance and wet grip performance.

## Claims

**1.** A pneumatic tire comprising a tread part,

the tread part comprising at least a cap tread and a jointless band,
the cap tread being formed of a rubber composition for a cap tread,
the jointless band comprising fiber cords coated with a rubber composition for fiber cord toppings,
the rubber composition for a cap tread comprising 6.0 parts by mass or more of antioxidant based on 100 parts by mass of a rubber component comprising a diene-based rubber,
wherein a subtread thickness at the bottom of tread main grooves is 0.1 to 3.0 mm.

2. The pneumatic tire of claim 1, wherein the rubber composition for a cap tread comprises 0.10 to 6.0 parts by mass of surfactant having a hydrophilic-lipophilic balance value calculated by the Oda method as described in the description of 5 to 12 and/or $C_{40-70}$ branched alkane based on 100 parts by mass of the rubber component.

3. The pneumatic tire of claim 1 or 2, wherein the rubber composition for a cap tread comprises a bisphenol-based antioxidant.

4. The pneumatic tire of any one of claims 1 to 3, wherein the rubber composition for a cap tread comprises two or more selected from the group consisting of a phenylenediamine-based antioxidant, a bisphenol-based antioxidant, and a quinoline-based antioxidant.

5. The pneumatic tire of any one of claims 1 to 4, wherein the rubber composition for a cap tread comprises 3.0 parts by mass or more of phenylenediamine-based antioxidant and/or bisphenol-based antioxidant based on 100 parts by mass of the rubber component.

6. The pneumatic tire of any one of claims 1 to 5, wherein the rubber composition for a cap tread comprises 3.1 parts by mass or more of phenylenediamine-based antioxidant and quinoline-based antioxidant based on 100 parts by mass of the rubber component.

7. The pneumatic tire of any one of claims 1 to 6, wherein the rubber composition for fiber cord toppings substantially does not comprise a phenylenediamine-based antioxidant and a bisphenol-based antioxidant.

## Patentansprüche

1. Luftreifen mit einem Laufflächenteil,

der Laufflächenteil mindestens eine Kronenlauffläche und ein fugenloses Band umfasst,
die Kronenlauffläche aus einer Kautschukmischung für eine Kronenlauffläche gebildet ist,
das fugenlose Band Faserkorde umfasst, die mit einer Kautschukmischung für Faserkordbeläge beschichtet sind,
die Kautschukzusammensetzung für eine Kronenlauffläche umfasst 6,0 Massenteile oder mehr Antioxidationsmittel, bezogen auf 100 Massenteile einer Kautschukkomponente, die einen Kautschuk auf Dienbasis umfasst,
wobei eine Unterprofildicke am Boden der Hauptrillen der Lauffläche 0,1 bis 3,0 mm beträgt.

2. Luftreifen nach Anspruch 1, wobei die Kautschukzusammensetzung für eine Kronenlauffläche 0,10 bis 6,0 Masseteile Tensid mit einem hydrophilenlipophilen Gleichgewichtswert, berechnet nach dem Oda-Verfahren, wie in der Beschreibung beschrieben, von 5 bis 12 und/oder ein verzweigtes $C_{40-70}$-Alkan, bezogen auf 100 Masseteile der Kautschukkomponente, umfasst.

3. Luftreifen nach Anspruch 1 oder 2, wobei die Kautschukzusammensetzung für eine Kronenlauffläche ein Antioxidationsmittel auf Bisphenolbasis umfasst.

4. Luftreifen nach einem der Ansprüche 1 bis 3, wobei die Kautschukzusammensetzung für eine Kronenlauffläche zwei oder mehr Antioxidantien umfasst, die aus der Gruppe ausgewählt sind, die aus einem Antioxidans auf Phenylendiaminbasis, einem Antioxidans auf Bisphenolbasis und einem Antioxidans auf Chinolinbasis besteht.

5. Luftreifen nach einem der Ansprüche 1 bis 4, wobei die Kautschukzusammensetzung für eine Kronenlauffläche 3,0 Masseteile oder mehr eines Antioxidationsmittels auf Phenylendiaminbasis und/oder eines Antioxidationsmittels auf Bisphenolbasis, bezogen auf 100 Masseteile der Kautschukkomponente, umfasst.

6. Luftreifen nach einem der Ansprüche 1 bis 5, wobei die Kautschukzusammensetzung für die Lauffläche der Kappe 3,1 Masseteile oder mehr Antioxidationsmittel auf Phenylendiaminbasis und Antioxidationsmittel auf Chinolinbasis, bezogen auf 100 Masseteile der Kautschukkomponente, umfasst.

7. Luftreifen nach einem der Ansprüche 1 bis 6, wobei die Kautschukzusammensetzung für Faserkordbeläge im Wesentlichen kein Antioxidationsmittel auf Phenylendiaminbasis und kein Antioxidationsmittel auf Bisphenolbasis umfasst.

## Revendications

1. Pneumatique comprenant une partie de la bande de roulement,

   la partie de la bande de roulement comprenant au moins une bande de revêtement et une bande sans jointures,
   la bande de revêtement étant formée d'une composition de caoutchouc pour une bande de revêtement,
   la bande sans jointures comprenant des cordons de fibres revêtus d'une composition de caoutchouc pour les nappes de cordon de fibres,
   la composition de caoutchouc pour une bande de revêtement comprend 6,0 parties en masse ou plus d'antioxydant sur la base de 100 parties en masse d'un composant de caoutchouc comprenant un caoutchouc à base de diène,
   dans lequel une épaisseur de sous-couche au fond des rainures principales de la bande de roulement est comprise entre 0,1 et 3,0 mm.

2. Pneumatique de la revendication 1, dans lequel la composition de caoutchouc pour une bande de revêtement comprend 0,10 à 6,0 parties en masse de tensioactif ayant une valeur d'équilibre hydrophile-lipophile calculée par la méthode Oda, comme décrite dans la description, de 5 à 12 et/ou d'alcane ramifié $C_{40-70}$ sur la base de 100 parties en masse du composant de caoutchouc.

3. Pneumatique de la revendication 1 ou 2, dans lequel la composition de caoutchouc pour une bande de revêtement comprend un antioxydant à base de bisphénol.

4. Pneumatique de l'une quelconque des revendications 1 à 3, dans lequel la composition de caoutchouc pour une bande de revêtement comprend deux ou plus choisis dans le groupe constitué d'un antioxydant à base de phénylènediamine, d'un antioxydant à base de bisphénol et d'un antioxydant à base de quinoléine.

5. Pneumatique de l'une quelconque des revendications 1 à 4, dans lequel la composition de caoutchouc pour une bande de revêtement comprend 3,0 parties en masse ou plus d'antioxydant à base de phénylènediamine et/ou d'antioxydant à base de bisphénol, sur la base de 100 parties en masse du composant en caoutchouc.

6. Pneumatique de l'une quelconque des revendications 1 à 5, dans lequel la composition de caoutchouc pour une bande de revêtement comprend 3,1 parties en masse ou plus d'antioxydant à base de phénylènediamine et d'antioxydant à base de quinoléine sur la base de 100 parties en masse du composant en caoutchouc.

7. Pneumatique de l'une quelconque des revendications 1 à 6, dans lequel la composition de caoutchouc pour les nappes de cordon de fibres sensiblement ne comprend pas d'antioxydant à base de phénylènediamine et d'antioxydant à base de bisphénol.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013166913 A
- EP 3012118 A
- EP 2949695 A
- JP 2006069305 A


### Non-patent literature cited in the description


- Table of Solubility Parameters. **K.L. HOY.** Solvent and Coatings Materials Research and Development Department. Union Carbites Corp, 1985